# EUROPEAN PATENT APPLICATION

(11) **EP 3 185 196 A1**
(43) Date of publication of application: **28.06.2017**
(21) Application number: 16198394.5
(22) Date of filing: 11.11.2016
(51) Int. Cl.: G06Q 20/40

(54) **PAYMENT METHOD AND APPARATUS**

(30) Priority: 24.12.2015 CN 201510983211
(71) Applicant: Xiaomi Inc., Beijing 100085 (CN)
(72) Inventor: HU, Yang, Haidian District, Beijing 100085 (CN); HUANG, Yuanyuan, Haidian District, Beijing 100085 (CN)
(74) Representative: Loustalan, Paul William

(57) **Abstract**

The present disclosure relates to a payment method and apparatus. The method includes that: acquired first biological characteristic information is received (101), a payment manner matched with the first biological characteristic information is determined (102) according to a binding relationship between biological characteristic information and payment manners, and payment is performed (103) in the payment manner matched with the first biological characteristic information.

## Description

### TECHNICAL FIELD

The present disclosure generally relates to payment technology, and more particularly, to a payment method and apparatus.

### BACKGROUND

Along with the increase of smart phones supporting a fingerprint identification function on the market, more and more convenience may be brought to people by fingerprint identification. For example, the applications of Apple Pay, Google Wallet, Alipay Wallet, Wechat or the like also apply fingerprint identification to daily payment behaviors of a user. Thus, operation of inputting a password may be eliminated after identity verification, so that the user may implement payment with only one finger when receiving a payment order.

During fingerprint payment, an order is usually generated first, and the system always selects a payment manner automatically, which may be a default payment manner specified in advance or a payment manner successfully implementing previous payment.

### SUMMARY

Accordingly, the present invention provides a payment method and apparatus, in accordance with claims which follow.

According to a first aspect of the present disclosure, a payment method is provided, which includes that:
acquired first biological characteristic information is received;
a payment manner matched with the first biological characteristic information is determined according to a binding relationship between biological characteristic information and payment manners; and
payment is performed in the payment manner matched with the first biological characteristic information.

According to the above aspect, the acquired first biological characteristic information is received during payment, the payment manner matched with the first biological characteristic information is determined according to the binding relationship between the biological characteristic information and the payment manners, and payment is performed in the payment manner matched with the first biological characteristic information. By the present disclosure, the problems of frequently changing payment manner and payment interruption caused by change of payment manner in the related technology may be solved. A corresponding payment manner may be selected for payment according to the acquired biological characteristic information, the step of selecting a payment manner is eliminated, the interruption of payment operation is avoided, and the operation is simplified. As such, this overcomes the problem whereby if a user is unsatisfied with the automatically chosen payment manner and needs to temporarily change the payment manner, a new payment manner is required to be selected before fingerprint verification, and then a fingerprint is verified to implement payment.

The step that the payment manner matched with the first biological characteristic information is determined according to the binding relationship between the biological characteristic information and the payment manners may include that:
the first biological characteristic information is searched in pre-stored biological characteristic information samples, and it is determined that the first biological characteristic information passes verification when there is a biological characteristic information sample in the pre-stored biological characteristic information samples to match with the first biological characteristic information; and
a payment manner bound with the matched biological characteristic information sample is determined according to a binding relationship between biological characteristic information samples and payment manners, the binding relationship between the biological characteristic information samples and the payment manners being preset.

The first biological characteristic information may be a first fingerprint, and the pre-stored biological characteristic information samples may be pre-stored fingerprint samples.

The step that the first biological characteristic information is searched in the pre-stored biological characteristic information samples and it is determined that the first biological characteristic information passes verification when there is the biological characteristic information sample in the pre-stored biological characteristic information samples to match with the first biological characteristic information may include that:
the first fingerprint is sequentially compared with the pre-stored fingerprint samples to determine whether there is a fingerprint sample in the pre-stored fingerprint samples to match with the first fingerprint;
it is determined that the first fingerprint passes verification when it is determined that there is a fingerprint sample in the pre-stored fingerprint samples to match with the first fingerprint; and
it is determined that the first fingerprint fails to pass verification when it is determined that there is not a fingerprint sample in the pre-stored fingerprint samples to match with the first fingerprint.

The first biological characteristic information may be first voice information, and the pre-stored biological characteristic information samples may be pre-stored voice information samples.

The step that the first biological characteristic information is matched with the pre-stored biological characteristic information samples and it is determined that the first biological characteristic information passes verification when it is determined that there is the biological characteristic information sample in the pre-stored biological characteristic information samples to match with the first biological characteristic information may include that:
the first voice information is sequentially compared with the pre-stored voice information samples to determine whether there is a voice information sample in the pre-stored voice information samples to match with the first voice information;
it is determined that the first voice information passes verification when it is determined that there is a voice information sample in the pre-stored voice information samples to match with the first voice information; and
it is determined that the first voice information fails to pass verification when it is determined that there is not a voice information sample in the pre-stored voice information samples to match with the first voice information.

The step that the payment manner bound with the matched biological characteristic information sample is determined according to the binding relationship between the biological characteristic information samples and the payment manners may include that:
a payment application is notified of a message indicating that the first biological characteristic information passes verification and the matched biological characteristic information sample; and
the payment manner bound with the matched biological characteristic information sample is determined by the payment application according to the binding relationship between the biological characteristic information samples and the payment manners.

According to a second aspect of the present disclosure, a payment apparatus is provided, which includes:
a receiving module, configured to receive acquired first biological characteristic information;
a payment manner confirmation module, configured to determine a payment manner matched with the first biological characteristic information according to a binding relationship between biological characteristic information and payment manners; and
a payment module, configured to perform payment in the payment manner matched with the first biological characteristic information.

According to the above aspect, the first biological characteristic information acquired is received during payment, the payment manner matched with the first biological characteristic information is determined according to the binding relationship between the biological characteristic information and the payment manners, and payment is performed in the payment manner matched with the first biological characteristic information. By the present disclosure, the problems of frequently changing payment manner and payment interruption caused by change of payment manner in the related technology may be solved. A corresponding payment manner may be selected for payment according to the acquired biological characteristic information, the step of selection a payment manner is eliminated, the interruption of payment operation is avoided, and the operation is simplified.

The payment manner confirmation module may include:
a payment verification sub-module, configured to search for the first biological characteristic information in pre-stored biological characteristic information samples, and determine that the first biological characteristic information passes verification when there is a biological characteristic information sample in the pre-stored biological characteristic information samples to match with the first biological characteristic information; and
a determination sub-module, configured to determine a payment manner bound with the matched biological characteristic information sample according to a binding relationship between a biological characteristic information samples and payment manners, the binding relationship between the biological characteristic information samples and the payment manners being preset.

The first biological characteristic information may be a first fingerprint, and the pre-stored biological characteristic information samples may be pre-stored fingerprint samples.

The payment verification sub-module may include:
a fingerprint matching sub-module, configured to sequentially compare the first fingerprint with the pre-stored fingerprint samples to determine whether there is a fingerprint sample in the pre-stored fingerprint samples to match with the first fingerprint; and
a fingerprint verification sub-module, configured to determine that the first fingerprint passes verification when it is determined that there is a fingerprint sample in the pre-stored fingerprint samples to match with the first fingerprint,
wherein the fingerprint verification sub-module is configured to determine that the first fingerprint fails to pass verification when it is determined that there is not a fingerprint sample in the pre-stored fingerprint samples to match with the first fingerprint.

The first biological characteristic information may be first voice information, and the pre-stored biological characteristic information samples may be pre-stored voice information samples.

The payment verification sub-module may include:
a voice matching sub-module, configured to sequentially compare the first voice information with the pre-stored voice information samples to determine whether there is a voice information sample in the pre-stored voice information samples to match with the first voice information; and
a voice verification sub-module, configured to determine that the first voice information passes verification when it is determined that there is a voice information sample in the pre-stored voice information samples to match with the first voice information,
wherein the voice verification sub-module is further configured to determine that the first voice information fails to pass verification when it is determined that there is not a voice information sample in the pre-stored voice information samples to match with the first voice information.

The payment manner confirmation module may be configured to:
notify a payment application of a message indicating that the first biological characteristic information passes verification and the matched biological characteristic information sample; and
determine the payment manner bound with the matched biological characteristic information sample by the payment application according to the binding relationship between the biological characteristic information samples and the payment manners.

According to a third aspect of the present invention, a payment apparatus is provided, which includes:
a processor; and
a memory configured to store instructions executable by the processor,
wherein the processor is configured to:
   receive acquired first biological characteristic information;
   determine a payment manner matched with the first biological characteristic information according to a binding relationship between biological characteristic information and payment manners; and
   perform payment in the payment manner matched with the first biological characteristic information.

The processor may be further configured to carry out the any or all of the method steps described above.

In one particular embodiment, the steps of the payment method are determined by computer program instructions.

Consequently, according to a fourth aspect, the invention is also directed to a computer program for executing the steps of a payment method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general description and detailed description below are only exemplary and explanatory and not intended to limit the present disclosure.

### BRIEF DESCRIPTION OF THE DRAWINGS

The accompanying drawings, which are incorporated in and constitute a part of this specification, illustrate the embodiments consistent with the present disclosure and, together with the specification, serve to explain the principles of the present disclosure.
Fig. 1 is a flow chart showing a payment method, according to an exemplary embodiment.
Fig. 2 is a flow chart showing a payment method, according to an exemplary embodiment.
Fig. 3 is a flow chart showing a payment method, according to an exemplary embodiment.
Fig. 4 is a block diagram illustrating a payment apparatus, according to an exemplary embodiment.
Fig. 5 is a block diagram illustrating a payment manner confirmation module, according to an embodiment shown in Fig. 4.
Fig. 6 is a block diagram illustrating a payment verification sub-module, according to an embodiment shown in Fig. 5.
Fig. 7 is a block diagram illustrating another payment verification sub-module, according to an embodiment shown in Fig. 5.
Fig. 8 is a block diagram illustrating a payment apparatus, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Before a payment method provided by the present disclosure is introduced, an application scenario involved in the present disclosure will be introduced at first. The application scenario may include a terminal. A fingerprint sensor configured to acquire a fingerprint is arranged on the terminal. The fingerprint sensor includes, but not limited to, an optical fingerprint sensor, a capacitive fingerprint sensor and a radio frequency (also called swipe) fingerprint sensor. A Trusted Application (TA) configured for fingerprint verification is set in a system of the terminal, and the TA is an application running in a Trusted Execution Environment (TEE) of an Application Processor (AP), wherein the AP is responsible for execution of most of applications and an operating system. The AP includes the TEE and a Rich Execution Environment (REE), wherein the REE is a regular execution area in the AP, and is configured to run most of applications, the operating system and the like, and the TEE is a secure and trustable execution area in the AP, coexists in the terminal with the operating system of the terminal, is configured to process and store some sensitive data, and has a security level higher than that of the REE. A payment application is also set in the terminal.

The terminal involved in each embodiment of the present disclosure may be electronic equipment supporting a biological characteristic (fingerprint, voice and the like) recognition function. For example, the terminal may be a mobile terminal such as a smart mobile phone, a tablet computer, a smart television, a smart watch, a Personal Digital Assistant (PDA) and a portable computer, and may also be a fixed terminal such as a desktop computer. The payment method provided by the present disclosure will now be described by the following embodiments.

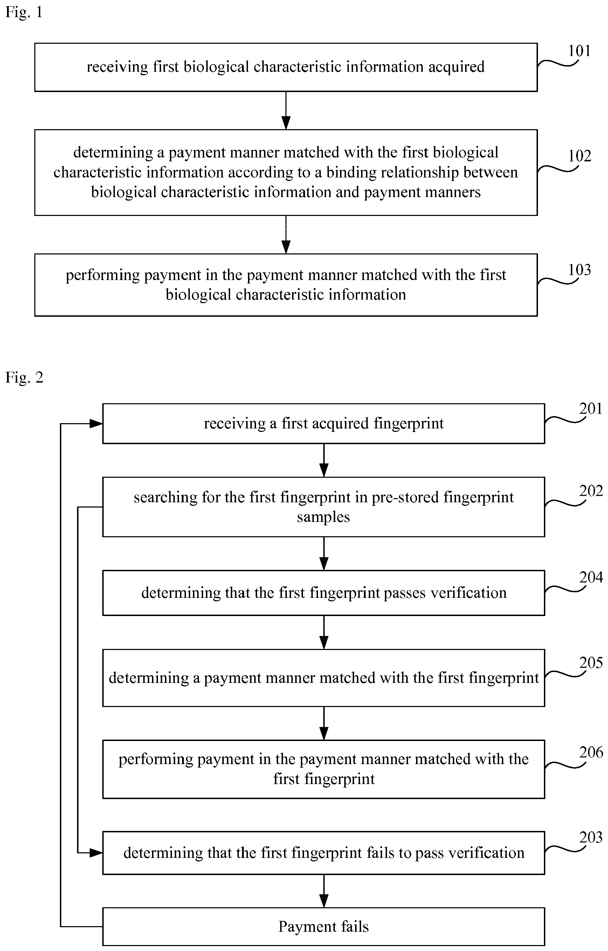

Fig. 1 is a flow chart showing a payment method, according to an exemplary embodiment. As shown in Fig. 1, the embodiment is illustrated with application of the payment method to a terminal and the terminal may be any one terminal in the abovementioned application scenario. Referring to Fig. 1, the payment method may include the following steps.

At Step 101, first biological characteristic information acquired is received.

As an example, the biological characteristic information may be a fingerprint, voice or the like of a user.

At Step 102, a payment manner matched with the first biological characteristic information is determined according to a binding relationship between biological characteristic information and payment manners.

As an example, the binding relationship between the biological characteristic information and the payment manners is preset. For example, if the biological characteristic information is a fingerprint, fingerprints of different fingers of the user may be bound with different payment manners in advance.

At Step 103, payment is performed in the payment manner matched with the first biological characteristic information.

From the above, according to the payment method provided by the embodiment of the present disclosure, the first biological characteristic information acquired is received during payment, the payment manner matched with the first biological characteristic information is determined according to the binding relationship between the biological characteristic information and the payment manners, and payment is performed in the payment manner matched with the first biological characteristic information. By the present disclosure, the problems of frequently changing payment manner and payment interruption caused by change of payment manner in the related technology may be solved. A corresponding payment manner may be selected for payment according to the acquired biological characteristic information, the step of selecting a payment manner is eliminated, the interruption of payment operation is avoided, and the payment operation is simplified.

Fig. 2 is a flow chart showing a payment method, according to an exemplary embodiment. The embodiment is illustrated with application of the payment method to a terminal and the terminal may be any one terminal in the abovementioned application scenario. In the embodiment, the biological characteristic information is exemplified as a fingerprint. Referring to Fig. 2, the payment method may include the following steps.

At Step 201, a first fingerprint acquired is received.

As an example, a payment application may request a bottom-layer TA configured for fingerprint verification to verify fingerprint after receiving an order in an upper layer. When detecting a finger of a user, the TA acquires fingerprint data of the finger via a fingerprint sensor, and records the fingerprint data as the first fingerprint, wherein the finger may be a finger bound with a payment manner to be selected by the user. Herein, such a binding relationship is preset, and the user may bind fingerprints of different fingers with different payment manners. For example, the fingerprint of the left thumb is bound with a China CITIC Bank credit card with tail numbers of 1234, the fingerprint of the right thumb is bound with a China Merchants Bank credit card with tail numbers of 4321 and the fingerprint of the right forefinger is bound with Alipay balance.

At Step 202, the first fingerprint is searched for in pre-stored fingerprint samples.

As an example, the first fingerprint may be sequentially compared with the pre-stored fingerprint samples, the pre-stored fingerprint samples being input by the user in advance, thereby judging whether there is a fingerprint sample in the pre-stored fingerprint samples to match with the first fingerprint.

When it is determined that there is a fingerprint sample in the pre-stored fingerprint samples to match with the first fingerprint, Step 204 is executed; and when it is determined that there is not a fingerprint sample in the pre-stored fingerprint samples to match with the first fingerprint, Step 203 is executed.

As an example, the pre-stored fingerprint samples may be stored in a fingerprint database, and the fingerprint database may be located in a TEE of an AP, wherein each fingerprint sample has a corresponding identifier, which may have a format of fingerprint_template_id. For example, a fingerprint sample of the fingerprint of the left thumb in Step 201 is identified as fingerprint_template_1, a fingerprint sample of the fingerprint of the right thumb is identified as fingerprint_template_2, and a fingerprint sample of the fingerprint of the right forefinger is identified as fingerprint_template_3, so that a binding relationship between fingerprint samples and payment manners may be a binding relationship between fingerprint_template_ids and payment manners.

At Step 203, it is determined that the first fingerprint does not pass verification, wherein the fingerprint failing to pass verification may cause a payment failure, and it is necessary to return to Step 201 for re-verification.

At Step 204, it is determined that the first fingerprint passes verification.

At Step 205, a payment manner matched with the first fingerprint is determined.

As an example, the step that the payment manner matched with the first fingerprint is determined may be implemented by determining a payment manner bound with the fingerprint sample matched with the first fingerprint according to the binding relationship between the fingerprint samples and the payment manners, thereby determining the payment manner bound with the fingerprint sample matched with the first fingerprint as the payment manner matched with the first fingerprint.

Herein, the binding relationship between the fingerprint samples and the payment manners is preset, as mentioned in Step 201. After the first fingerprint passes verification, an identifier of the fingerprint sample matched with the first fingerprint which passes verification is recorded. It is assumed that the fingerprint sample matched with the first fingerprint is the fingerprint sample of the fingerprint of the right forefinger in Step 202, and then fingerprint_template_3 is recorded.

After that, the payment manner bound with fingerprint_template_3 of the fingerprint sample may be determined to be Alipay balance according to the binding relationship between the fingerprint samples and the payment manners in Step 201, wherein a payment manner determination process may be executed by the payment application. For example, a TA configured for fingerprint verification transmits a message indicating that the first fingerprint passes verification and fingerprint_template_3 together to the payment application in an encryption manner after the first fingerprint passes verification, so that the payment application learns about that the first fingerprint passes verification after obtaining the message indicating that the first fingerprint passes verification and fingerprint_template_3, and determines that the payment manner bound with fingerprint_template_3 is Alipay balance according to the preset binding relationship between fingerprint_template_ids and the payment manners.

At Step 206, payment is performed in the payment manner matched with the first fingerprint.

As an example, the payment manner, Alipay balance, determined in Step 205 may be selected by the payment application for a deduction payment behavior.

It can be seen that the user is not required to select any payment manner during payment, and instead the user is only required to put a finger bound with a preferred payment manner on the fingerprint sensor of the terminal after determining the payment manner to implement payment in the preferred payment manner, so that payment operation interruption is avoided, and meanwhile, the operation is also simplified.

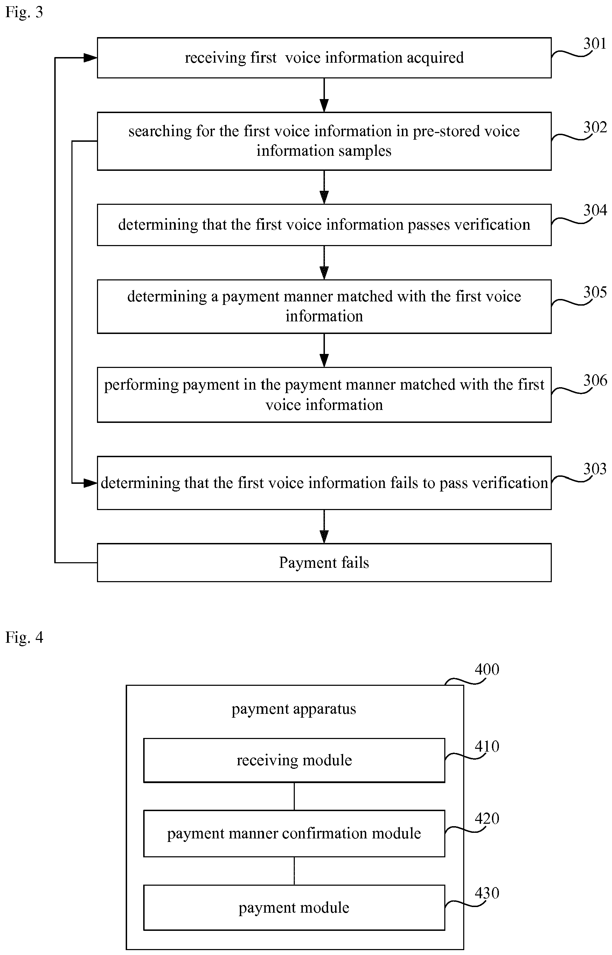

Fig. 3 is a flow chart showing a payment method, according to an exemplary embodiment. Descriptions will be made with regard to biological characteristic information by example of voice information. Referring to Fig. 3, the payment method may include the following steps.

At Step 301, first voice information acquired is received.

As an example, a payment application may request a bottom-layer TA configured for fingerprint verification to verify fingerprint after receiving an order in an upper layer. The TA may acquire through a speaker and record a voice generated when a user speaks as the first voice information, wherein the voice information may be voice information bound with a payment manner to be selected by the user. Herein, such a binding relationship is preset, and the user may record different voice information and bind with different payment manners in advance. For example, the user may record a voice of reading "Zhongxin Yinhang" as a first voice information sample and bind it with a China CITIC Bank credit card with tail numbers of 1234, record a voice of reading "Zhaoshang Yinhang" as a second voice information sample and bind it with a China Merchants Bank credit card with tail numbers of 4321, and record a voice of reading "Zhifubao Yu'e" as a third voice information sample and bind it with a Alipay balance.

Voices of each person have unique voiceprints, and may be used as identification bases like fingerprints, so that voices made by reading preset texts by the user may realize the same function like fingerprints.

At Step 302, the first voice information is searched for in pre-stored voice information samples.

As an example, the first voice information may be sequentially compared with the pre-stored voice information samples, the pre-stored voice information samples being recorded by the user in advance, thereby judging whether there is a voice information sample in the pre-stored voice information samples to match with the first voice information.

Herein, the comparison process may include comparing a voiceprint of the first received voice information with voiceprints of the pre-stored voice information samples and when there is a voice information sample with the same voiceprint as that of the first voice information, comparing the voice information sample with the same voiceprint as that of the first voice information with content of the first voice information. If the contents are the same, it may be determined that they are matched.

When it is determined that there is a voice information sample in the pre-stored voice information samples to match with the first voice information, Step 304 is executed; and when it is determined that there is not a voice information sample in the pre-stored voice information samples to match with the first voice information, Step 303 is executed.

As an example, the pre-stored voice information samples may be stored in a voice information database, and the voice information database may be located in a TEE of an AP, wherein each voice information sample has a corresponding identifier, which may have a format of voice_template_id. For example, the first voice information sample in Step 301 is identified as voice_template_1, the second voice information sample is identified as voice_template_2, and the third voice information sample is identified as voice_template_3, so that a binding relationship between voice information samples and payment manners may be a binding relationship between voice_template_ids and payment manners.

At Step 303, it is determined that the first voice information does not pass verification, wherein the voice information failing to pass verification may cause a payment failure, and it is necessary to return to Step 301 for re-verification.

At Step 304, it is determined that the first voice information passes verification.

At Step 305, a payment manner matched with the first voice information is determined.

As an example, the step that the payment manner matched with the first voice information is determined may be implemented by determining a payment manner bound with the voice information sample matched with the first voice information according to the binding relationship between the voice information samples and the payment manners, thereby determining the payment manner bound with the voice information sample matched with the first voice information as the payment manner matched with the first voice information.

Herein, the binding relationship between the voice information samples and the payment manners is preset, as mentioned in Step 301. After the first voice information passes verification, an identifier of the voice information sample matched with the first voice information which passes verification is recorded. It is assumed that the voice information sample matched with the first voice information is the third voice information sample in Step 302, and then recorded as voice_template_3 is recorded.

After that, the payment manner bound with voice_template_3 of the voice information sample may be determined to be Alipay balance according to the binding relationship between the voice information samples and the payment manners in Step 301, wherein a payment manner determination process may be executed by the payment application. For example, a TA configured for voice information verification transmits a message indicating that the first voice information passes verification and voice_template_3 together to the payment application in an encryption manner after the first voice information passes verification, so that the payment application learns about that the first voice information passes verification after obtaining the message indicating that the first voice information passes verification and voice_template_3, and determines that the payment manner bound with voice_template_3 is Alipay balance according to the preset binding relationship between voice_template_ids and the payment manners.

At Step 306, payment is performed in the payment manner matched with the first voice information.

As an example, the payment manner, Alipay balance, determined in Step 305 may be selected by the payment application for a deduction payment behavior.

It can be seen that the user is not required to select any payment manner during payment, and instead the user is only required to read voice information bound with a preferred payment manner after determining the payment manner to implement payment in the preferred payment manner, so that payment operation interruption is avoided, and meanwhile, the operation is also simplified.

From the above, according to the payment method provided by the embodiment of the present disclosure, the first biological characteristic information acquired is received during payment, the payment manner matched with the first biological characteristic information is determined according to the binding relationship between the biological characteristic information and the payment manners, and payment is performed in the payment manner matched with the first biological characteristic information. By the present disclosure, the problems of frequently changing payment manner and payment interruption caused by change of payment manner in the related technology may be solved. A corresponding payment manner may be selected for payment according to the acquired biological characteristic information, the step of selection a payment manner is eliminated, the interruption of payment operation is avoided, and the operation is simplified.

Fig. 4 is a block diagram illustrating a payment apparatus, according to an exemplary embodiment. The payment apparatus 400 may be configured to execute the method shown in any one of Fig. 1 to Fig. 3. The apparatus 400 may be implemented as a part or all of a terminal by software, hardware or a combination thereof, and the terminal may be any one terminal in the abovementioned application scenario. Referring to Fig. 4, the payment apparatus 400 may include:
a receiving module 410, configured to receive first biological characteristic information acquired;
a payment manner confirmation module 420, configured to determine a payment manner matched with the first biological characteristic information according to a binding relationship between biological characteristic information and payment manners; and
a payment module 430, configured to perform payment in the payment manner matched with the first biological characteristic information.

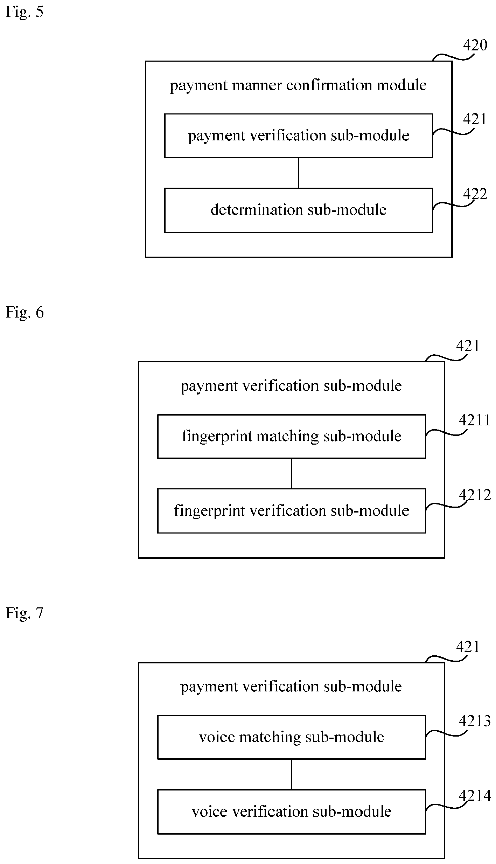

Optionally, Fig. 5 is a block diagram illustrating a payment manner confirmation module, according to an embodiment shown in Fig. 4. Referring to Fig. 5, the payment manner confirmation module 420 includes:
a payment verification sub-module 421, configured to search for the first biological characteristic information in pre-stored biological characteristic information samples, and determine that the first biological characteristic information passes verification when there is a biological characteristic information sample in the pre-stored biological characteristic information samples to match with the first biological characteristic information; and
a determination sub-module 422, configured to determine a payment manner bound with the matched biological characteristic information sample according to a binding relationship between biological characteristic information samples and payment manners, the binding relationship between the biological characteristic information samples and the payment manners being preset.

Optionally, the first biological characteristic information is a first fingerprint, and the pre-stored biological characteristic information samples are pre-stored fingerprint samples.

Optionally, Fig. 6 is a block diagram illustrating a payment verification sub-module, according to an embodiment shown in Fig. 5. Referring to Fig. 6, the payment verification sub-module 421 includes:
a fingerprint matching sub-module 4211, configured to sequentially compare the first fingerprint with the pre-stored fingerprint samples to determine whether there is a fingerprint sample in the pre-stored fingerprint samples to match with the first fingerprint; and
a fingerprint verification sub-module 4212, configured to determine that the first fingerprint passes verification when it is determined that there is a fingerprint sample in the pre-stored fingerprint samples to match with the first fingerprint.

The fingerprint verification sub-module 4212 is further configured to determine that the first fingerprint does not pass verification when there is not a fingerprint sample in the pre-stored fingerprint samples to match with the first fingerprint.

Optionally, the first biological characteristic information is first voice information, and the pre-stored biological characteristic information samples are pre-stored voice information samples.

Optionally, Fig. 7 is a block diagram illustrating another payment verification sub-module, according to an embodiment shown in Fig. 5. Referring to Fig. 7, the payment verification sub-module 421 includes:
a voice matching sub-module 4213, configured to sequentially compare the first voice information with the pre-stored voice information samples to determine whether there is a voice information sample in the pre-stored voice information samples to match with the first voice information; and
a voice verification sub-module 4214, configured to determine that the first voice information passes verification when it is determined that there is a voice information sample in the pre-stored voice information samples to match with the first voice information.

The voice verification sub-module 4214 is further configured to determine that the first voice information does not pass verification when it is determined that there is not a voice information sample in the pre-stored voice information samples to match with the first voice information.

Optionally, the payment manner confirmation module is configured to:
notify a payment application of a message indicating that the first biological characteristic information passes verification and the matched biological characteristic information sample; and
determine the payment manner bound with the matched biological characteristic information sample by the payment application according to the binding relationship between the biological characteristic information samples and the payment manners.

From the above, according to the payment apparatus provided by the embodiment of the present disclosure, the first biological characteristic information acquired is received during payment, the payment manner matched with the first biological characteristic information is determined according to the binding relationship between the biological characteristic information and the payment manners, and payment is performed in the payment manner matched with the first biological characteristic information. By the present disclosure, the problems of frequently changing payment manner and payment interruption caused by change of payment manner in the related technology may be solved. A corresponding payment manner may be selected for payment according to the acquired biological characteristic information, the step of selecting a payment manner is eliminated, the interruption of payment operation is avoided, and the payment operation is simplified.

With respect to the apparatuses in the above embodiments, the specific manners for performing operations by individual modules therein have been described in detail in the embodiments regarding the methods, which will not be elaborated herein.

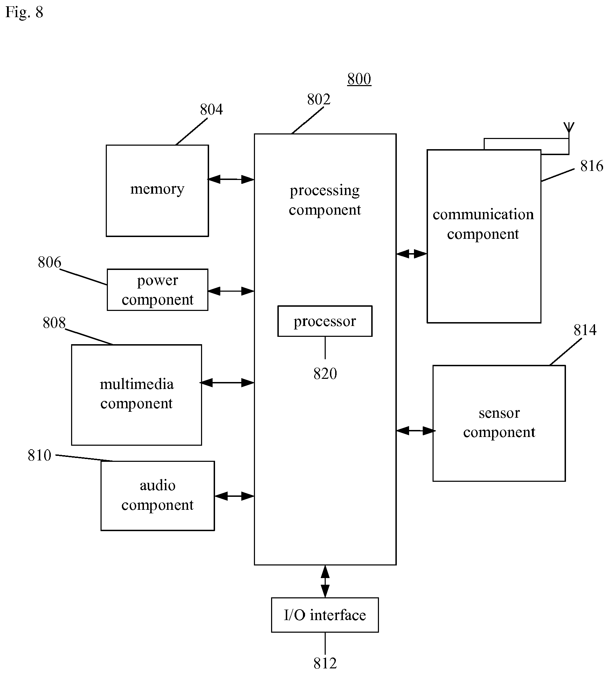

Fig. 8 is a block diagram of a payment apparatus 800, according to an exemplary embodiment. For example, the apparatus 800 may be a mobile phone, a computer, a digital broadcast terminal, a messaging apparatus, a gaming console, a tablet, a medical apparatus, exercise equipment, a PDA or the like.

Referring to Fig. 8, the apparatus 800 may include one or more of the following components: a processing component 802, a memory 804, a power component 806, a multimedia component 808, an audio component 810, an Input/Output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the abovementioned methods shown in any one of Fig. 1 to Fig. 3. Moreover, the processing component 802 may include one or more modules which facilitate interaction between the processing component 802 and the other components. For instance, the processing component 802 may include a multimedia module to facilitate interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 provides power to various components of the apparatus 800. The power component 806 may include a power management system, one or more power supplies, and other components associated with the generation, management and distribution of power in the apparatus 800.

The multimedia component 808 includes a screen providing an output interface between the apparatus 800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a period of time and pressure associated with the touch or swipe action. In some embodiments, the multimedia component 808 includes a front camera and/or a rear camera. The front camera and/or the rear camera may receive external multimedia data when the apparatus 800 is in an operation mode, such as a photographing mode or a video mode. Each of the front camera and the rear camera may be a fixed optical lens system or have focus and optical zoom capabilities.

The audio component 810 is configured to output and/or input an audio signal. For example, the audio component 810 includes a Microphone (MIC) configured to receive an external audio signal when the apparatus 800 is in the operation mode, such as a call mode, a recording mode and a voice recognition mode. The received audio signal may be further stored in the memory 804 or sent through the communication component 816. In some embodiments, the audio component 810 further includes a speaker configured to output the audio signal.

The I/O interface 812 provides an interface between the processing component 802 and a peripheral interface module, such as a keyboard, a click wheel, a button or the like. The button may include, but not limited to: a home button, a volume button, a starting button or a locking button.

The sensor component 814 includes one or more sensors configured to provide status assessment in various aspects for the apparatus 800. For instance, the sensor component 814 may detect an on/off status of the apparatus 800 and relative positioning of components, such as a display and small keyboard of the apparatus 800, and the sensor component 814 may further detect a change in a position of the apparatus 800 or a component of the apparatus 800, presence or absence of contact between the user and the apparatus 800, orientation or acceleration/deceleration of the apparatus 800 and a change in temperature of the apparatus 800. The sensor component 814 may include a proximity sensor configured to detect presence of an object nearby without any physical contact. The sensor component 814 may also include a light sensor, such as a Complementary Metal Oxide Semiconductor (CMOS) or Charge Coupled Apparatus (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the apparatus 800 and another apparatuses. The apparatus 800 may access a communication-standard-based wireless network, such as a Wireless Fidelity (WiFi) network, a 2nd-Generation (2G) or 3rd-Generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technologies.

In an exemplary embodiment, the apparatus 800 may be implemented with one or more Application Specific Integrated Circuits (ASICs), Digital Signal Processors (DSPs), Digital Signal Processing Apparatuss (DSPDs), Programmable Logic Apparatuss (PLDs), Field Programmable Gate Arrays (FPGAs), controllers, micro-controllers, microprocessors or other electronic components, and is configured to execute the methods shown in any one of Fig. 1 to Fig. 3.

In an exemplary embodiment, there is also provided a non-transitory computer-readable storage medium including instructions, such as the memory 804 including instructions, and the instructions may be executed by the processor 820 of the apparatus 800 to implement the methods shown in any one of Fig. 1 to Fig. 3. For example, the non-transitory computer-readable storage medium may be a ROM, a Radom Access Memory (RAM), a Compact Disc Read-Only Memory (CD-ROM), a magnetic tape, a floppy disc, an optical data storage apparatus or the like.

It will be appreciated that the present disclosure is not limited to the exact construction that has been described above and illustrated in the accompanying drawings, and that various modifications and changes may be made.

## Claims

1. A payment method, **characterized in that**, the method comprises:
receiving (101) acquired first biological characteristic information;
determining (102) a payment manner matched with the first biological characteristic information according to a binding relationship between biological characteristic information and payment manners; and
performing (103) payment in the payment manner matched with the first biological characteristic information.

2. The method according to claim 1, wherein the step of determining (102) the payment manner matched with the first biological characteristic information according to the binding relationship between the biological characteristic information and the payment manners comprises:
searching for the first biological characteristic information in pre-stored biological characteristic information samples, and determining that the first biological characteristic information passes verification when there is a biological characteristic information sample in the pre-stored biological characteristic information samples to match with the first biological characteristic information; and
determining a payment manner bound with the matched biological characteristic information sample according to a binding relationship between biological characteristic information samples and payment manners, the binding relationship between the biological characteristic information samples and the payment manners being preset.

3. The method according to claim 2, wherein the first biological characteristic information is a first fingerprint, and the pre-stored biological characteristic information samples are pre-stored fingerprint samples.

4. The method according to claim 3, wherein the step of searching for the first biological characteristic information in the pre-stored biological characteristic information samples and determining that the first biological characteristic information passes verification when there is the biological characteristic information sample in the pre-stored biological characteristic information samples to match with the first biological characteristic information comprises:
sequentially comparing (202) the first fingerprint with the pre-stored fingerprint samples to determine whether there is a fingerprint sample in the pre-stored fingerprint samples to match with the first fingerprint;
determining (204) that the first fingerprint passes verification when it is determined that there is a fingerprint sample in the pre-stored fingerprint samples to match with the first fingerprint; and
determining (206) that the first fingerprint fails to pass verification when it is determined that there is not a fingerprint sample in the pre-stored fingerprint samples to match with the first fingerprint.

5. The method according to claim 2, wherein the first biological characteristic information is first voice information, and the pre-stored biological characteristic information samples are pre-stored voice information samples.

6. The method according to claim 5, wherein the step of searching for the first biological characteristic information in the pre-stored biological characteristic information samples and determining that the first biological characteristic information passes verification when it is determined that there is the biological characteristic information sample in the pre-stored biological characteristic information samples to match with the first biological characteristic information comprises:
sequentially comparing (302) the first voice information with the pre-stored voice information samples to determine whether there is a voice information sample in the pre-stored voice information samples to match with the first voice information;
determining (304) that the first voice information passes verification when it is determined that there is a voice information sample in the pre-stored voice information samples to match with the first voice information; and
determining (303) that the first voice information fails to pass verification when it is determined that there is not a voice information sample in the pre-stored voice information samples to match with the first voice information.

7. The method according to any one of claims 2 to 6, wherein the step of determining (102) the payment manner bound with the matched biological characteristic information sample according to the binding relationship between the biological characteristic information samples and the payment manners comprises:
notifying a payment application of a message indicating that the first biological characteristic information passes verification and the matched biological characteristic information sample; and
determining, by the payment application, the payment manner bound with the matched biological characteristic information sample according to the binding relationship between the biological characteristic information samples and the payment manners.

8. A payment apparatus, **characterized in that**, the apparatus comprises:
a receiving module (410), configured to receive acquired first biological characteristic information;
a payment manner confirmation module (420), configured to determine a payment manner matched with the first biological characteristic information according to a binding relationship between biological characteristic information and payment manners; and
a payment module (430), configured to perform payment in the payment manner matched with the first biological characteristic information.

9. The apparatus according to claim 8, wherein the payment manner confirmation module (420) comprises:
a payment verification sub-module (421), configured to search for the first biological characteristic information in pre-stored biological characteristic information samples, and determine that the first biological characteristic information passes verification when there is a biological characteristic information sample in the pre-stored biological characteristic information samples to match with the first biological characteristic information; and
a determination sub-module (422), configured to determine a payment manner bound with the matched biological characteristic information sample according to a binding relationship between biological characteristic information samples and payment manners, the binding relationship between the biological characteristic information samples and the payment manners being preset.

10. The apparatus according to claim 9, wherein the first biological characteristic information is a first fingerprint, and the pre-stored biological characteristic information samples are pre-stored fingerprint samples, wherein the payment verification sub-module (421) comprises:
a fingerprint matching sub-module (4211), configured to sequentially compare the first fingerprint with the pre-stored fingerprint samples to determine whether there is a fingerprint sample in the pre-stored fingerprint samples to match with the first fingerprint; and
a fingerprint verification sub-module (4212), configured to determine that the first fingerprint passes verification when it is determined that there is a fingerprint sample in the pre-stored fingerprint samples to match with the first fingerprint,
wherein the fingerprint verification sub-module (4212) is further configured to determine that the first fingerprint fails to pass verification when it is determined that there is not a fingerprint sample in the pre-stored fingerprint samples to match with the first fingerprint.

11. The apparatus according to claim 9, wherein the first biological characteristic information is first voice information, and the pre-stored biological characteristic information samples are pre-stored voice information samples, wherein the payment verification sub-module (421) comprises:
a voice matching sub-module (4213), configured to sequentially compare the first voice information with the pre-stored voice information samples to determine whether there is a voice information sample in the pre-stored voice information samples to match with the first voice information; and
a voice verification sub-module (4214), configured to determine that the first voice information passes verification when it is determined that there is a voice information sample in the pre-stored voice information samples to match with the first voice information,
wherein the voice verification sub-module (4214) is further configured to determine that the first voice information fails to pass verification when it is determined that there is not a voice information sample in the pre-stored voice information samples to match with the first voice information.

12. The apparatus according to any one of claims 9 to 11, wherein the payment manner confirmation module (420) is configured to:
notify a payment application of a message indicating that the first biological characteristic information passes verification and the matched biological characteristic information sample; and
determine the payment manner bound with the matched biological characteristic information sample by the payment application according to the binding relationship between the biological characteristic information samples and the payment manners.

13. A payment apparatus, comprising:
a processor; and
a memory configured to store instructions executable by the processor,
wherein the processor is configured to carry out the method of any of claims 1 to 7.

14. A computer program including instructions for executing the steps of the payment method according to any one of claims 1 to 7 when said program is executed by a computer.

15. A recording medium readable by a computer and having recorded thereon a computer program including instructions for executing the steps of the payment method for according to any one of claims 1 to 7.
